# EUROPEAN PATENT APPLICATION

(11) **EP 1 950 490 A2**
(43) Date of publication of application: **30.07.2008**
(21) Application number: 08002586.9
(22) Date of filing: 18.11.2003
(51) Int. Cl.: F21K 7/00

(54) **Lighting body or source of light based on light-emitting diodes**

(30) Priority: 19.11.2002 DK 200201773
(62) Divisional of application: 03773573.5
(71) Applicant: Friis, Dan, 3650 Olstykke (DK)
(72) Inventor: Friis, Dan, 3650 Olstykke (DK)
(74) Representative: van Walstijn, Bartholomeus G. G.

(57) **Abstract**

According to the present invention there is provided a lighting body or a source of light (10) comprising a lighting part (11) with a number of light-emitting diodes (12) (LEDs), and a mechanical colour shade regulator (81). The mechanical colour shade regulator may have two, three or more regulating plates arranged below each other, said regulating plates being arranged so that they can rotate or slide independently of each other between two or more positions, to thereby cover different parts of the LEDs.

## Description

### FIELD OF THE INVENTION

The present invention relates to a lighting body or a source of light having a number of light-emitting diodes, and in particular to a lighting body comprising both a lighting part with light-emitting diodes and a power part for supplying a direct current to the light-emitting diodes. The present invention further relates to a lighting body comprising a lighting part with light-emitting diodes and a mechanical colour shade regulator.

### BACKGROUND OF THE INVENTION

Today, there already are a number of patents dealing with generation of light by use of light-emitting diodes. The following patents deal with this subject:
WO018265
US20020070688
US20020048169
US6450661
JP2002158376
GB2361581
US2002057567
JP2001325809
AU5913401
WO0182657
US6292901
WO0136864

The above-mentioned patents deal with either colouring by use of a computer, control of a network of light sources, control of one or more light-emitting diodes or computer- or contact-controlled functions on the lamp. It is only US2002057567 that deals with the production of a spotlight lamp. The present invention is based on another method than the method described in US2002057567.

None of the above-mentioned patents have taken into account the arrangement of the light-emitting diodes in relation to the generated light. Likewise, the total energy consumption of both the light-emitting diodes and the power supply or the change in the colour of the light-emitting diodes resulting from both the effect of heat and the ageing of the light-emitting diodes have not been taken into account.

Document US 6 474 837 discloses a source of light comprising a lighting part with a number of light-emitting diodes and a mechanical colour shade regulator.

### SUMMARY OF THE INVENTION

According to the present invention, there is provided a lighting body or a source of light comprising:
a lighting part with a number of light-emitting diodes (LEDs), and
a mechanical colour shade regulator.

For a preferred embodiment of the invention the light emitting diodes are arranged on a substantially plane LED printed circuit board.

For embodiments of the present invention having a mechanical colour shade regulator, the mechanical colour shade regulator may comprise a single regulating plate, with the regulating plate being arranged so that it can rotate or slide between two or more positions to thereby cover different parts of the LEDs. It is also within an embodiment of the invention that the mechanical colour shade regulator comprises two, three or more regulating plates arranged below each other, with the regulating plates being arranged so that they can rotate or slide independently of each other between two or more positions, to thereby cover different parts of the LEDs. It is preferred that the regulating plate(s) is/are arranged substantial parallel to the LED printed circuit board.

It is also preferred that one or more of the regulating plates of the mechanical colour shade regulator is/are made of a transparent material being covered on the outer side by a raster or screen. Here the regulating plate may be made of a glass material or a plastic material. According to a preferred embodiment, the outer side of the regulating plate is covered by a raster or screen having the form of a lattice pattern or a dot pattern. It should be understood that the area of the light-emitting diodes being covered by the raster of a regulating plate may be varied by rotating or sliding the regulating plate. According to an embodiment of the invention having a mechanical colour shade regulator then when the regulating plate is in a first position, the light-emitting diodes may be affected by a raster of 0% or in the range of 0-5%, and when the regulating plate is in a second position the light-emitting diodes may be affected by a raster in the range of 5-20%, such as about 10%.

For embodiments of the invention having a mechanical colour shade regulator it is within a preferred embodiment that the lighting part comprises light-emitting diodes of a first and a second colour, and the mechanical colour shade regulator comprises a first and a second regulating plate, said regulating plates being arranged so that the first plate can rotate or slide to thereby have its raster at least partly covering the light-emitting diodes of the first colour, and so that the second plate can rotate or slide to thereby have its raster at least partly covering the light-emitting diodes of the second colour. Here, the lighting part may further comprise light-emitting diodes of a third colour, and the mechanical colour shade regulator may further comprise a third regulating plate, said third regulating plate being arranged so that it can rotate or slide to thereby have its raster at least partly covering the light-emitting diodes of the third colour.

The aspects of the present invention also covers embodiments wherein the lighting part comprises light-emitting diodes of at least two colours. Hereby it may be possible to obtain a coloured light.

It is also within embodiments of the aspects of the present invention that the lighting part comprises light-emitting diodes of at least three colours. Here, the light-emitting diodes may comprise red, green and blue light-emitting diodes. The red, green and blue light-emitting diodes may be arranged so as to obtain white light. Here it is preferred that the light-emitting diodes having the same colour are not placed next to each other.

The red, green and blue light-emitting diodes may also be arranged so as to obtain coloured light. Here, at least some light-emitting diodes having the same colour may be placed next to each other.

The aspects of the present invention also covers embodiments wherein the light-emitting diodes of the lighting part are placed or arranged in concentric circles or in polygons. Here, the concentric circles or polygons may be arranged having their centre in the centre of the light source.

The lighting body or source of light according to embodiments of the present invention may be cast into a watertight and/or heat-resistant material. Here, the casting material may be heat-conducting so that the heat is conducted away from the light-emitting diodes.

According to an embodiment of the present invention, the lighting part or the light-emitting diodes may be arranged in a non-conducting liquid bath for conducting away the heat from the light-emitting diodes.

The aspects of the present invention may cover embodiments of a source of light comprising:
a number of light-emitting diodes, a power supply and a mechanical colour shade regulator. It is within an embodiment that the light-emitting diodes may include at least three coloured light-emitting diodes, red, green and blue, for providing white light. Alternatively, the light-emitting diodes may include at least three coloured light-emitting diodes, red, green and blue, for providing coloured light. It is also within an embodiment that the light-emitting diodes include at least two coloured light-emitting diodes for providing coloured light. The light-emitting diodes may be assembled in one or more strings. Each string being made up of series connected light-emitting diodes, and each of the strings may be current controlled by a constant or variable current. Each string may be connected to a temperature compensating circuit. This circuit may consist of a temperature sensitive resistor for controlling the current in the strings of light-emitting diodes. The temperature controlling circuit may also consist of a temperature sensor for controlling the current in the strings of the light-emitting diodes.

According to one or more embodiments of the light source of the present invention, the power supply for the light-emitting diodes may be built together with the light source so that the light source appears as a single unit. In this embodiment the light source may replace existing halogen spotlight lamps. The light source may be formed as any two-dimensional symmetrical figure, such as for example a circle, a star, a circular disc or the like. The light source may in addition to this be formed as any two-dimensional asymmetrical figure, such as for example an animal, an amoebic form or the like. The light-emitting diodes of the light source of the invention may be placed or arranged in concentric circles or in polygons. The concentric circles or polygons may be arranged having their centre in the centre of the light source. The concentric circles or polygons may in addition to this be arranged as smaller units or in an embodiment of the light source, which is not symmetrical formed.

The light source of the present invention may be cast into a watertight and/or heat-resistant material, which may be washed in a normal automatic dishwasher or sterilized by use of an apparatus adapted for that purpose. Here, the casting material may be heat-conducting so that the heat is conducted away from the light-emitting diodes. It is also within an embodiment that the light-emitting diodes are arranged in a non-conducting liquid bath for conducting away the heat from the light-emitting diodes. In this embodiment the outer side of the light source may be smooth or provided with cooling fins.

For the light source of the present invention a reflective layer may be arranged beneath the light-emitting diodes for collecting the amount of light being emitted to the rear by the light-emitting diodes. The reflective layer may be formed so that the light emitted to the rear is reflected forwards in the same direction as the light being emitted forwards by the light-emitting diodes. This way, the reflected light will increase the efficiency of the light emission of the light source.

For the light source of the present invention having a mechanical colour shade regulator, the mechanical colour shade regulator may formed as a circular disc or another plate or sheet of a transparent material as for example glass, plexiglass or the like. The regulator is furthermore on the outer side covered by a raster or screen, which may have the form of for example a lattice pattern or a dot pattern. Here, the raster or screen pattern may be formed as a sliding raster or screen from 0-100%. The raster or screen may also be formed as a fixed raster or screen by which should be understood that in a first position the light source may be affected by a raster of 0% and in a second position the light source may be affected by a raster of for example 10%. The mechanical colour shade regulator may be formed as a sliding plate comprising several regulators, which may depend on each other or be independent of each other. Thus, mechanical regulation of the light/shade of light may be performed by use of one or more rotateable/slideable plate/plates with fixed damper/raster or screen.

The light source of the present invention also covers embodiments in which the power supply for the light-emitting diodes are partly built together with the light source so that the light source appears as a single unit. But wherein the common supply unit is constructed in order to reduce the loss in the total power supply. This embodiment of the light source may replace existing halogen systems.

The present invention also covers embodiments in which a reflective layer is arranged beneath the light-emitting diodes for reflecting forwards light being emitted to the rear by the light-emitting diodes.

The present invention also covers embodiments in which the lighting body or source of light of the invention further comprises one or more optical lenses for focusing the light emitted from the light-emitting diodes.

It is also within the present invention that a reflector or a shield is arranged along the edge of the lighting part of the lighting body or source of light. Here, the edge reflector or shield may be arranged so as to form a shield for the outer edge of the field of emitted light.

Light-emitting diodes are used in a countless number of different applications of which the most widespread use is as an indicator on different apparatuses. During recent years light-emitting diodes have also been used especially as stoplight for cars, traffic light and for railway signalling. Add to this an increasing use in different applications concerning signalling.

So far, light-emitting diodes have not been used as a light source for lighting of homes, institutions, hospitals etc.. Light-emitting diodes can now be produced at a price and at a quality making it possible to use them as an alternative to traditional lighting.

The use of light-emitting diodes as a light source further has the advantage that they consume a considerable smaller amount of electrical energy than existing lamps. However, it should be remembered to take into account the loss of power in the used power supply, as the gain in energy may be lost due to a poor power supply. The price of electrical energy is increasing and at present there are no applicable alternatives to fossil/nuclear produced electrical energy, which alternatives may bring down the price. Thus energy saving light sources are of interest for the society as a whole and for the individual consumer in particular.

Light sources produced by use of light-emitting diodes for which the generated light can be regulated in colour may be used within all the areas in which spotlight lamps are used today. Furthermore, regulating of colour or shade of colour is taking part in bringing out or providing a desired ambience.

In shops with illumination of a display of a product line, the light sources used today deliver a great amount of heat causing inconvenience for the personnel and the displayed articles. By use of the herein described light source this problem may be eliminated, as the light-emitting diodes do not deliver heat to a noticeable degree. This may also be used within areas such as:
Dentists, where the presently used lamps deliver heat to the neck of the dentist.
Hospitals, where the big lamps at the operating tables deliver heat, causing inconvenience for the surgical doctor, who may perspire unnecessary.
Theatres, where the presently used projectors heat the scene to an unpleasant high temperature.
Food/fresh-food, where the heat reduces the shelf-life of the products.

The long lifetime of the light-emitting diodes means that the light source will have a long lifetime. This makes the light source especially suited for places being difficult to access. Furthermore, the long lifetime of the light source may be used when there is a demand/whish for continuous light during most of the day and night or the whole day and night.

The light-emitting diodes, which are presently available, can be used for producing a spotlight lamp having the same dimensions as existing halogen spotlights, and can generate the same amount of light as a 20 Watt halogen spotlight by using only 3 Watt.

According to the present embodiment, the power supply may be built together with the light-emitting diodes so that the power supply and the light-emitting diodes together form the spotlight unit. This unitmay be inserted straight away into the same socket as the existing halogen spotlight without replacement of the existing power supply. The above-mentioned patents prescribe replacement of socket, power supply, new external power supply and/or set-up of a totally new network for the lamps.

The linkage of light-emitting diodes and power supply may also provide a certainty that the total power consumption is held within the prescribed limits so that the announced energy saving is a real saving, which is not consumed by a poor power supply.

Light-emitting diodes are constantly improved and within the next couple of years, light-emitting diodes, which will make it possible to generate an amount of light corresponding to a 35 Watt halogen spotlight lamp, will be available. Here, it should be noted that reference is made to the presently existing halogen spotlight lamps. The halogen lamps are also improved on a continuous basis and the first improved halogen spotlight lamps are arrived at the market.

The output of light from the light-emitting diodes are improved on a continuous basis, which as time goes by will make it possible to produce spotlight lamps having light-emitting diodes, which lamps can replace all presently known spotlight lamps.

From the above discussion, it should be understood that embodiments of the present invention may provide a source of light for which the supplied or generated light can be regulated in colour as well as in the shade of the single colour or tint. Embodiments of the present invention may also provide a source of light, which almost does not supply heat. Embodiments of the present invention may provide a source of light, which is energy saving and may replace existing spotlight lamps.

The source of light of the present invention may be intended for use in applications for which spotlight lamps are used today. Add to this a number of new applications such as a reading lamp for visually handicapped etc..

Other objects, features and advantages of the present invention will be more readily apparent from the detailed description of the preferred embodiments set forth below, taken in conjunction with the accompanying drawings.

### BRIEF DESCRIPTION OF THE DRAWINGS

Fig. 1 shows a lighting body or source of light according to an embodiment of the present invention,
Fig. 2 shows the arrangement of light-emitting diodes in a lighting body or source of light according to an embodiment of the present invention,
Figs. 3a, 3b, 3c illustrates alternatives of arrangements of light emitting diodes according to embodiments of the present invention,
Figs. 4a, 4b are block diagrams showing the arrangement of components of two lighting bodies or sources of light according to the invention having an AC to DC power supply,
Fig. 5 is a detailed diagram showing the components of the block diagram of Fig. 4a,
Figs. 6a and 6b are block diagrams showing the arrangement of components of two lighting bodies or sources of light according to the invention having a DC to DC power supply,
Fig. 7 is a detailed diagram showing the components of a DC to DC power supply to be used in an embodiment of the lighting bodies of Fig. 6a and 6b,
Figs. 8a, 8b, 8c illustrates mechanical colour shade regulators according to embodiments of the present invention,
Fig. 9 shows the arrangement of a reflector or a reflective layer in a lighting body or source of light according to an embodiment of the present invention,
Fig. 10 shows the arrangement of a colour shade regulator and a conventional lens on a lighting body or source of light according to an embodiment of the present invention, and
Fig. 11 shows the arrangement of a colour shade regulator and a holographic lens on a lighting body or source of light according to an embodiment of the present invention.

### DESCRIPTION OF PREFERRED EMBODIMENTS

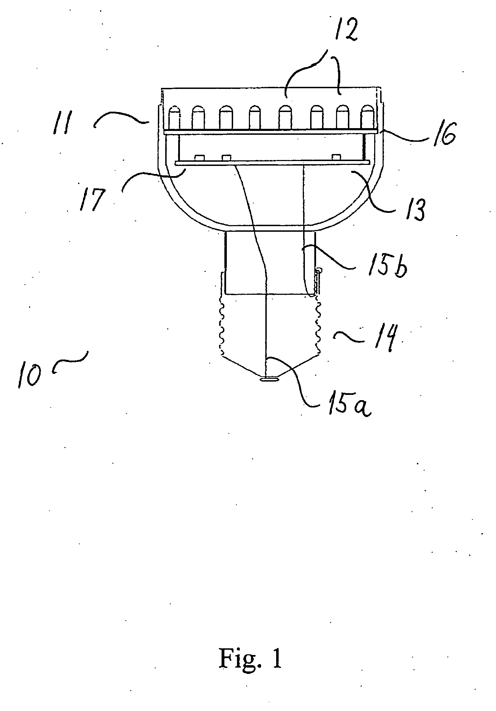

Fig. 1 shows a lighting body or source of light 10 according to an embodiment of the present invention. The lighting body 10 has a lighting part 11 with a number of light-emitting diodes, LEDs, 12, and a power part 13 with a power converter for converting an incoming AC or DC current to a direct current for supply of the LEDs 12. The lighting body has a socket, which may be an Edison screw socket type E14, with socket connections 15a, 15b for connecting the socket 14 to inputs of the power converter. The light-emitting diodes 12 are arranged on a plane LED printed circuit board 16, and the components of the power part 13 are arranged on a power supply printed circuit board 17 placed below the LED circuit board 16.

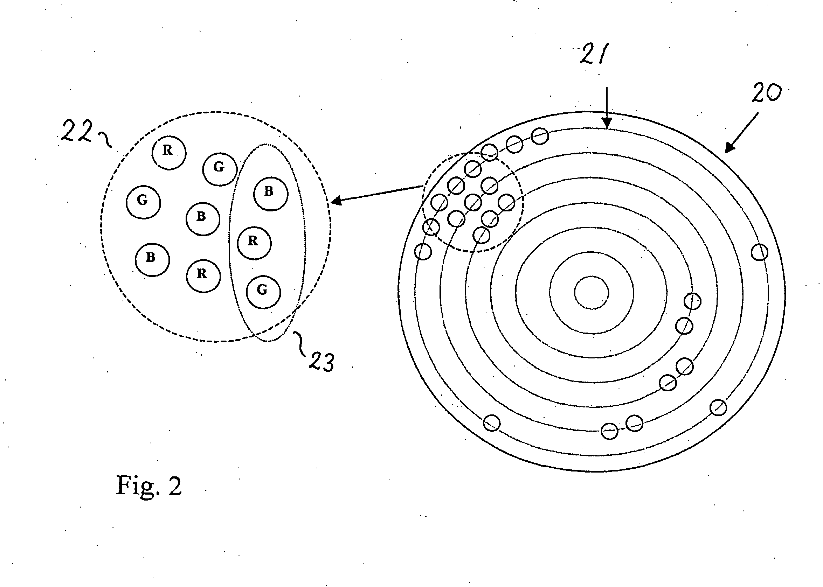

Fig. 2 shows the arrangement of light-emitting diodes in a lighting body or source of light 20 according to an embodiment of the present invention. Here, light-emitting diodes of 3 colours are used, red, green and blue. According to a preferred embodiment the light-emitting diodes are arranged in concentric circles 21, in which light-emitting diodes having the same colour do not appear next to each other. Likewise, light-emitting diodes having the same colour do not appear facing each other in each of the concentric circles, segment 22 and sub segment 23. In segment 22 the red, green and blue diodes are denoted R, G and B, respectively.

The light-emitting diodes may not be placed or arranged in a random way since this may not result in a homogenous distribution of light. It is preferred that the arrangement of the light-emitting diodes follow the following rules:
1. Light-emitting diodes having the same colour may not be placed next to each other.
2. The light-emitting diodes shall be placed in concentric circles, which may be centred round the centre of the light source. For an embodiment of the light source, which is not symmetrical formed, the concentric circles can also be arranged as smaller units.
3. As an alternative to the concentric circles, the light-emitting diodes may also be placed in a polygon structure, which is centred round the centre of the light source. For an embodiment of the light source, which is not symmetrical formed, the polygon structure can also be arranged as smaller units.

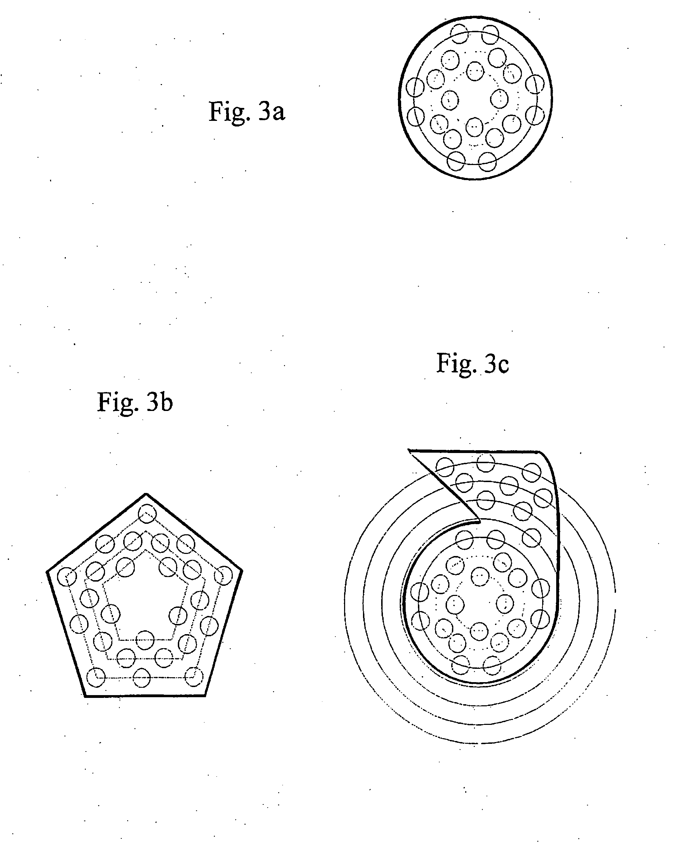

Figs. 3a, 3b, 3c illustrates alternatives of arrangements of light emitting diodes according to embodiments of the present invention. In Fig. 3a, the diodes are arranged following concentric circles, in Fig. 3b the diodes are arranged in a polygon structure, which is centred round the centre of the light source, while in Fig. 3c is shown a light source, which is not symmetrical formed, but where the diodes are arranged on concentric circle lines.

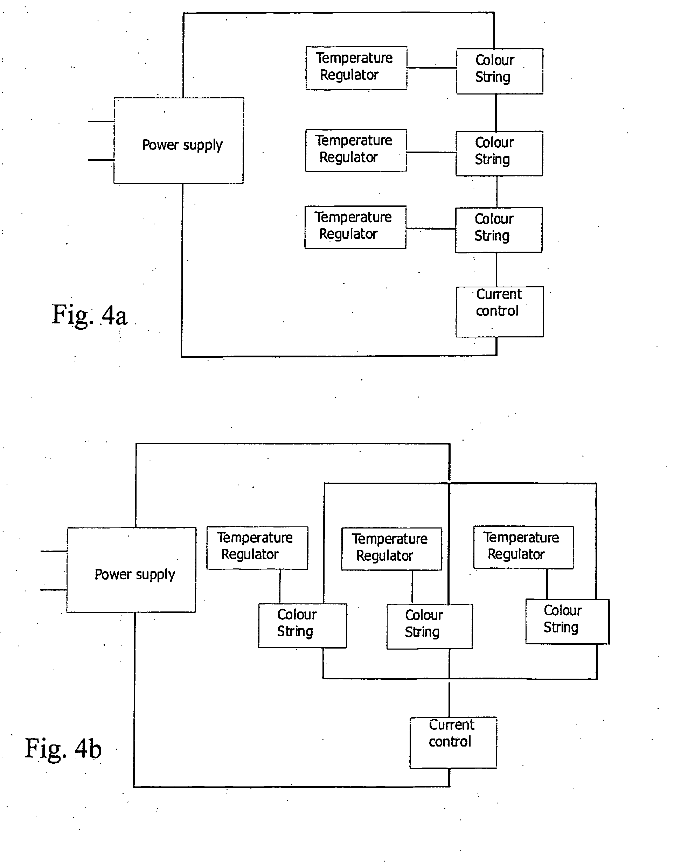

Figs. 4a, 4b are block diagrams showing the arrangement of components of two lighting bodies or sources of light according to the invention having an AC to DC power supply. In Fig. 4a, the light-emitting diodes are put together in one serial diode string comprising 3 colour strings of serial connected light-emitting diodes.
Here, one colour string comprises diodes of one colour only, and by having 3 colour strings, the diode string may comprise light-emitting diodes of 3 different colours. Between the diode string and the AC to DC power supply is connected a current controlling or limiting circuit. Furthermore, each of the 3 colour strings is connected to a temperature regulating circuit or a temperature compensating circuit for controlling the current in the corresponding colour string as a function of diode temperature.

In Fig. 4b, the light-emitting diodes are arranged in 3 serial diode strings, and these 3 diode strings are connected in parallel with the AC to DC power supply, with a current controlling or limiting circuit inserted in series with the power supply. Here, each of the 3 diode strings comprises one colour string of serial connected light-emitting diodes. Also here, by having 3 colour strings, the diode strings may comprise light-emitting diodes of 3 different colours. Again, each of the 3 colour strings is connected to a temperature regulating circuit or a temperature compensating circuit for controlling the current in the corresponding colour string as a function of diode temperature.

In a preferred embodiment each diode string may consist of a number of light-emitting diodes in each of the three colours red, green and blue. It is also possible to put together the light-emitting diodes in strings of the same colour. The number of light-emitting diodes in each colour in a diode string depends on:
1. The total number of light-emitting diodes in the unit.
2. The employed power supply.
3. The voltage for which the unit is produced.

In a preferred embodiment for 12V and 220V/115V, the number of tight-emitting diodes will be 30. For other embodiments there may be more or less light-emitting diodes, depending on the desired amount of light or special wishes to the geometry.

The light-emitting diodes are divided in strings so that each string is supplied with a voltage corresponding to the total voltage drop across the diodes, when the voltage drop is at a maximum, but the strings are not necessarily supplied with the same current.

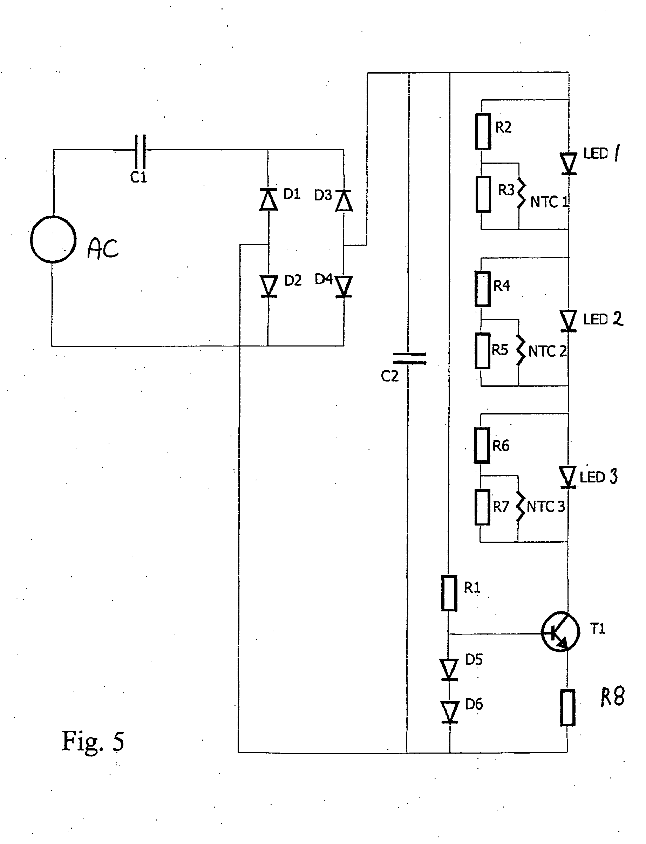

Fig. 5 is a detailed diagram showing the components of the block diagram of Fig. 4a. Here, the AC to DC power supply is a reactance divider, which is used in connection with the supply of the light-emitting diodes of the light source from 220V/115V AC. The reactance divider may be almost loss-free. The AC to DC converter of Fig. 5 has first and second AC-supply terminals and a non-isolated capacitor fed diode rectifier with a first capacitor C1 being coupled between the first AC terminal and a first diode rectifier input and with a second input of the diode rectifier being supplied from the second AC terminal. The diode rectifier is a full wave bridge rectifier having rectifying diodes D1, D2, D3 and D4. The diode rectifier has first and second diode rectifier outputs with a second capacitor C2 being coupled between said first and second diode rectifier outputs. The value of the first capacitor C1 may be in the range 100nF to 1µF and the capacitor C1 may be of the metal film type, preferably having an X2 mark.

The capacitor C2 may serve for smoothening the voltage of the output of the diode rectifier.

In Fig. 5 the current controlling or limiting circuit comprises a transistor T1, resistors R1 and R8 and diodes D5 and D6. The limiting value of the current by which the controlling circuit will be limiting the current may be determined by selecting the value of R8. Usually, the current limiting function will only be active for high input voltages being around twice the normal input voltage.

For the circuit of Fig. 5, there is one diode string comprising 3 colour strings, being named LED1, LED 2 and LED 3, respectively. Here, each colour string is illustrated by one LED. For the first colour string, there is a first temperature compensating circuit having resistors R1, R2 and an NTC resistor NTC1. The value of NTC1 is reduced with increasing temperature, whereby the current through the NTC resistor is increased with increased temperature, and the current through the series connected diodes of the corresponding colour string is reduced.

For the second colour string LED2, the components of the temperature compensating circuit are named R4, R5 and NTC2, and for the third colour string LED3, the components of the temperature compensating circuit are named R6, R7 and NTC3, respectively.

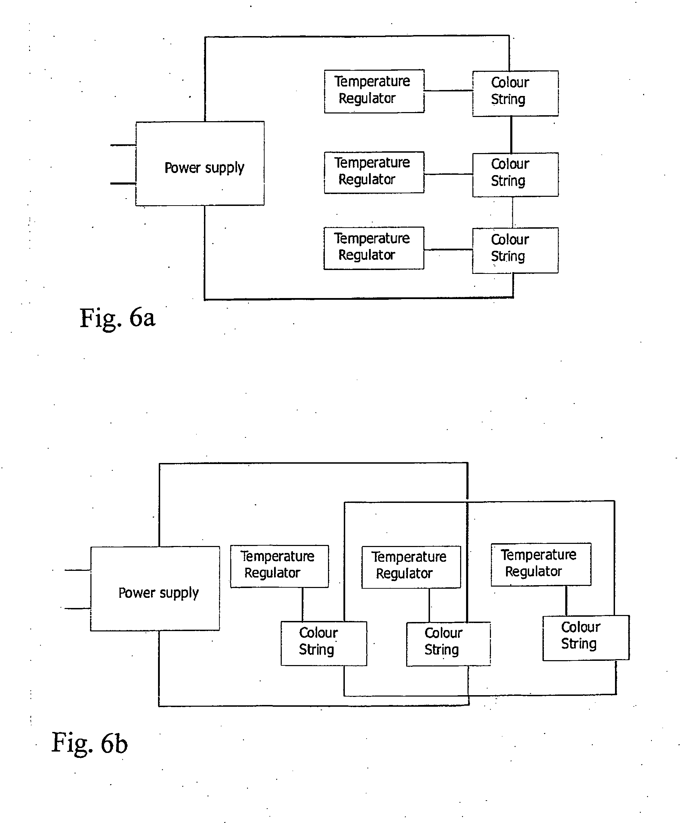

Figs. 6a and 6b are block diagrams showing the arrangement of components of two lighting bodies or sources of light according to the invention having a DC to DC power supply. The block diagram of Fig. 6a corresponds to the diagram of Fig. 4a, with the exception that there is no current control or limiting circuit in Fig. 6a. Similarly, the block diagram of Fig. 6b corresponds to the diagram of Fig. 4b, with the exception that there is no current control or limiting circuit in Fig. 6b.

Thus, in Fig. 6a, the light-emitting diodes are put together in one serial diode string comprising 3 colour strings of serial connected light-emitting diodes, and in Fig. 6b, the light-emitting diodes are arranged in 3 serial diode strings, each of which is a colour string, and these 3 diode strings are connected in parallel with the DC to DC power supply. The temperature regulating circuits or temperature compensating circuits are preferably the same as shown in Fig. 5 and used for controlling the cur rent in the corresponding colour string as a function of diode temperature.

The lighting body or source of light of the present invention may be supplied with the necessary electrical energy by a power supply, which can be either separate or built together with the light source. However, for DC to DC power supplies of Fig. 6a and 6b, the power supply is built together with the light source. Here, the DC to DC power supply may be used in connection with 12V AC, 6V DC, 12V DC or 24V DC supplies, which may be used in cars, boats, caravans, halogen spotlights and so on.

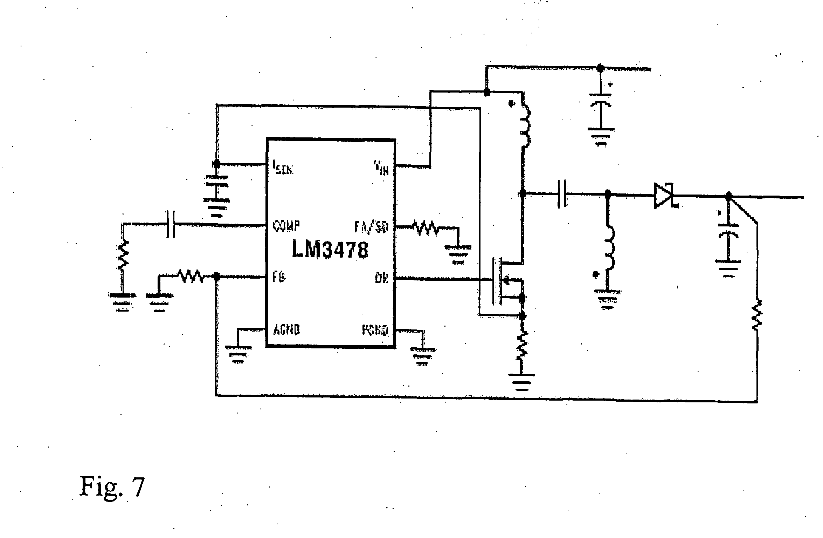

The DC to DC power supply to be used in the lighting bodies if Fig. 6a and 6b may be a boost converter built on the LM 3478 circuit from National Semiconductor, as illustrated in Fig. 7. Here, the DC input voltage may be in the range of 5-40 V.
The DC to DC power supply may be adapted for the voltage and the current to be supplied to the strings of tight-emitting diodes.

Due to the use of light-emitting diodes the light source 10 may have a very long lifetime, which is typically 100.000 hours by continuous use assuming that the operating temperature is below 40 ° C.

The light source 10 can be formed in a countless number of ways without having the basic functionality changed. By the basic functionality in this connection is meant the possibility for emitting coloured light. The light source 10 may then be formed as a star, a circle, a cross or other two-dimensional figures.

The light source 10 can be cast into heat resistant and watertight materials, which makes it possible to wash the light source by use of a normal automatic dishwasher or by use of machines for sterilizing at temperatures up to 85 ° C.

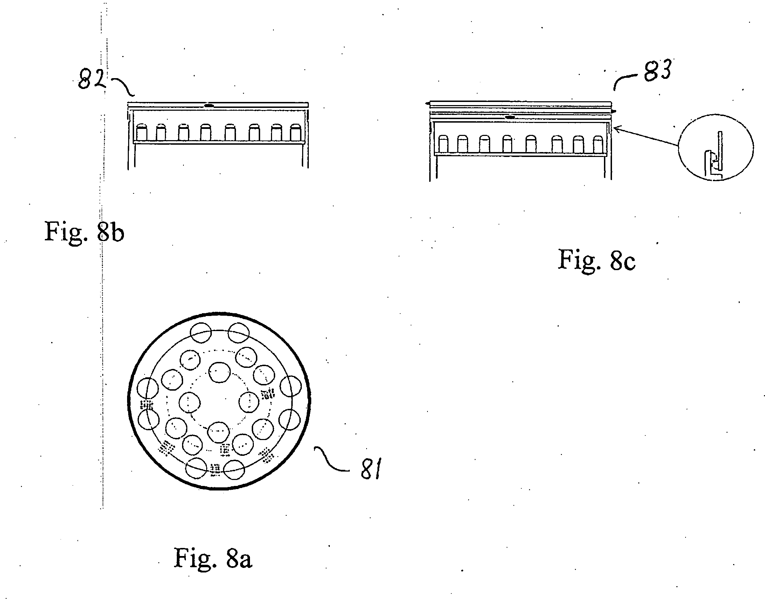

Figs. 8a, 8b, 8c illustrates mechanical colour shade regulators according to embodiments of the present invention. Fig. 8a shows a regulator 81 from the front side of the light source 10. The regulator 81 may comprise a single regulating plate as shown in Fig. 8b, which is a side view of a light source 10 with a single regulating plate 82, or the regulator 81 may comprise two or three regulating plates, as illustrated in Fig. 8c, which is a side view of a light source 10 having a regulator 83 with three regulating plates.

When the mechanical colour shade regulator comprises a single regulating plate, the regulating plate may be arranged so that it can rotate or slide between two or more positions to thereby cover different parts of the LEDs. When the mechanical colour shade regulator comprises two, three or more regulating plates arranged below each other, the regulating plates should be arranged so that they can rotate or slide independently of each other between two or more positions, to thereby cover different parts of the LEDs.

The regulating plate of the mechanical colour shade regulator may be made of a transparent material being covered on the outer side by a raster or screen. Thus, the regulating plate may be made of a glass material or a plastic material, such as plexiglass. The regulating plate may on the outer side be covered by a raster or screen having the form of a lattice pattern or a dot pattern.

It should be understood that the area of the light-emitting diodes being covered by the raster may be varied by rotating or sliding the regulating plate. This may be seen from the front view of Fig. 8a, where the dotted areas show a raster pattern, which more or less may cover the light-emitting diodes, the area of the diodes being covered being determined by the rotating of the regulating plate.

For a regulator comprising two regulating plates, and wherein the lighting part comprises light-emitting diodes of a first and a second colour, the regulating plates may be arranged so that the first plate can rotate or slide to thereby have its raster at least partly covering the light-emitting diodes of the first colour, and so that the second plate can rotate or slide to thereby have its raster at least partly covering the light-emitting diodes of the second colour. When the lighting part further comprises light-emitting diodes of a third colour, and the mechanical colour shade regulator further comprises a third regulating plate, the third regulating plate may be arranged so that it can rotate or slide to thereby have its raster at least partly covering the light-emitting diodes of the third colour.

In a preferred embodiment the regulator 81 consists of a transparent heat resistant materials with a raster or screen arranged in front of the light-emitting diodes. When the raster or screen is arranged on the outer side of the regulator, the heat delivered to the raster or screen pattern may be delivered to the surroundings. In this way the heat is not delivered to the interior of the light source thereby only having a minimum effect of the light-emitting diodes. In a preferred embodiment the raster or screen pattern can be formed as a dot pattern, but it can also be formed as a lattice pattern. The raster or screen pattern may also be formed as a sliding raster or screen going from 0% to 100% coverage. The regulator 81 may be formed so that it can be turned by use of a finger or the like. In this way the raster or screen pattern can be placed above the individual tight-emitting diodes and totally or partly remove the contribution of light from one or more of the diodes.

As discussed above, the regulator may also comprise several regulating plates, each of which can be turned in dependency of each other or without being dependent on each other. Likewise, the raster or screen of the individual regulator may be differently formed dependent on the desired effect.

Light-emitting diodes are sensitive to the heat to which they are exposed. If light-emitting diodes get too warm (> 40 °C), then a forced aging occurs. On the other hand, if the temperature is below 40 °C, then the lifetime of the diodes is increased and for strongly reduced temperatures, the efficiency of the individual diode will be increased, temperature < 20 °C.

Since the characteristics of the individual diodes are not alike, then for large changes in the temperature as well as due to normal aging of the diodes, a shift in the mixture of the colours will occur. The time it takes before the change in colour due to ageing becomes visible for the user depends among other things of the heat to which the light-emitting diodes are exposed. This could for example be in connection with high surrounding temperatures. Such a change in colour can easily be regulated for by the used regulator 81.

For the string or wire constructions of Figs. 4 and 6, there may be a built in temperature compensation, which lowers the delivered power in the individual light-emitfing diode if the operating temperature is increased due to for example a change in the surrounding temperature.

This compensation takes care of that the mixture of the colours is held rather constant and that the lifetime of the lamp is maintained. For temperatures above 40 °C, the result is a weak decrease in the efficiency of the light emission, for which reason there may be taken care of that the operating temperature is held as low as possible, which may include use of cooling.

Therefore, the regulation primarily may be rendered necessary by the natural ageing of the diodes and by large changes in the surrounding temperatures.

Furthermore, in a preferred embodiment the emission of heat from the light-emitting diodes may be conducted away via the used embedding. The emission of heat may also be conducted away by use of a non-conducting liquid being arranged as a liquid bath in which the light-emitting diodes are placed, and the heat is then conducted away via the outer side of the lamp, which thereby functions as a cooling plate. The outer side may then be formed with or without cooling grooves dependent on the size of the light source and amount of emitted heat.

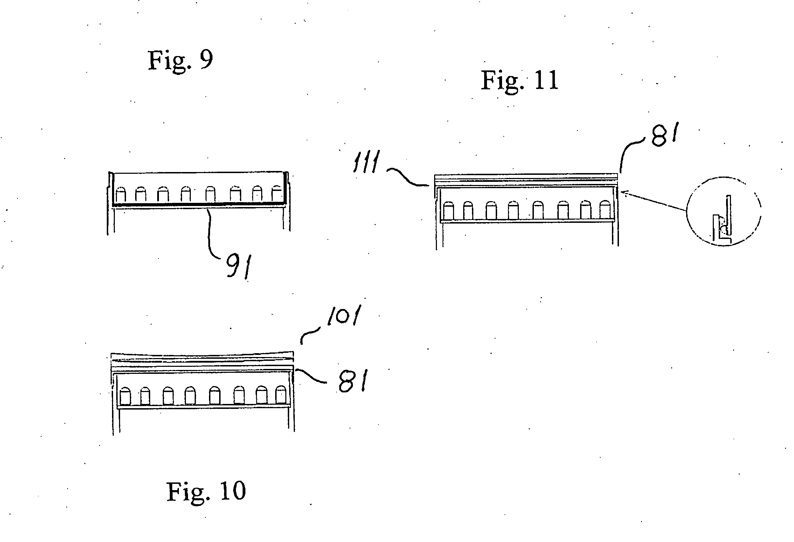

A small amount of light may be emitted from the rear side of the light-emitting diodes. This amount of light may be collected by use of a reflective layer on the printed circuit board on which board the light-emitting diodes are mounted. In this way an increase in the efficiency of the light emission of up to 20% may be obtained. This is illustrated in Fig. 9, which shows the arrangement of a reflector or a reflective layer 91 in a lighting body or source of light 10 according to an embodiment of the present invention,

Fig. 10 shows the arrangement of a colour shade regulator having a single regulating plate 81 and a conventional lens 101 on a lighting body or source of light 10 according to an embodiment of the present invention.

Fig. 11 shows the arrangement of a colour shade regulator having a single regulating plate 81 and a holographic lens 111 on a lighting body or source of light 10 according to an embodiment of the present invention.

## Claims

1. A lighting body or a source of light comprising:
a lighting part with a number of light-emitting diodes (LEDs), and
a mechanical colour shade regulator,
wherein the mechanical colour shade regulator comprises two, three or more regulating plates arranged below each other, said regulating plates being arranged so that they can rotate or slide independently of each other between two or more positions, to thereby cover different parts of the LEDs.

2. A lighting body or a source of light according to claim 1, wherein the light emitting diodes are arranged on a substantially plane LED printed circuit board.

3. A lighting body or a source of light according to claim 2, wherein the regulating plates are arranged substantial parallel to the LED printed circuit board.

4. A lighting body or a source of light according to any one of the claims 1-3,
wherein a regulating plate of the mechanical colour shade regulator is made of a transparent material being covered on the outer side by a raster or screen.

5. A lighting body or a source of light according to claim 4, wherein the regulating plate is made of a glass material or a plastic material.

6. A lighting body or a source of light according to claim 4 or 5, wherein the regulating plate on the outer side is covered by a raster or screen having the form of a lattice pattern or a dot pattern.

7. A lighting body or a source of light according to any one of the claims 1-6,
wherein the area of the light-emitting diodes being covered by the raster is varied by rotating or sliding the regulating plate.

8. A lighting body or a source of light according to any one of the claims 4-7,
wherein when the regulating plate is in a first position, the light-emitting diodes are affected by a raster of 0%, and when the regulating plate is in a second position the light-emitting diodes are affected by a raster in the range of 5-20%.

9. A lighting body or a source of light according to any one of the claims 4-8,
wherein the lighting part comprises light-emitting diodes of a first and a second colour, and the mechanical colour shade regulator comprises a first and a second regulating plate, said regulating plates being arranged so that the first plate can rotate or slide to thereby have its raster at least partly covering the light-emitting diodes of the first colour, and so that the second plate can rotate or slide to thereby have its raster at least partly covering the light-emitting diodes of the second colour.

10. A lighting body or a source of light according to claim 9, wherein the lighting part further comprises light-emitting diodes of a third colour, and the mechanical colour shade regulator further comprises a third regulating plate, said third regulating plate being arranged so that it can rotate or slide to thereby have its raster at least partly covering the light-emifting diodes of the third colour.

11. A lighting body or a source of light according to any one of the claims 1-10,
wherein the lighting part comprises light-emitting diodes of at least two colours, to thereby obtain a coloured light.

12. A lighting body or a source of light according to any one of the claims 1-11,
wherein the lighting part comprises light-emitting diodes of at least three colours.

13. A lighting body or a source of light according to claim 12, wherein the light-emitting diodes comprises red, green and blue light-emitting diodes.

14. A lighting body or a source of light according to claim 13, wherein the red, green and blue light-emitting diodes are arranged so as to obtain white light.

15. A lighting body or a source of light according to any one of the claims 12-14,
wherein light-emitting diodes having the same colour are not placed next to each other.

16. A lighting body or a source of light according to claim 15, wherein the red, green and blue light-emitting diodes are arranged so as to obtain coloured light.

17. A lighting body or a source of light according to claim 16, wherein at least some light-emitting diodes having the same colour are placed next to each other.

18. A lighting body or a source of light according to any one of the claims 1-17,
wherein the light-emitting diodes of the lighting part are placed or arranged in concentric circles or in polygons.

19. A lighting body or a source of light according to claim 18, wherein the concentric circles or polygons are arranged having their centre in the centre of the light source.

20. A lighting body or a source of light according to any one of the claims 1-19,
wherein the light source is cast into a watertight and/or heat-resistant material.

21. A lighting body or a source of light according to 20, wherein the casting material is heat-conducting so that the heat is conducted away from the light-emitting diodes.

22. A lighting body or a source of light according to any one of the claims 1-21,
wherein the light-emitting diodes are arranged in a non-conducting liquid bath for conducting away the heat from the light-emitting diodes.

23. A lighting body or a source of light according to any one of the claims 1-22,
wherein a reflective layer is arranged beneath the light-emitting diodes for reflecting forwards light being emitted to the rear by the light-emitting diodes.

24. A lighting body or a source of light according to any one of the claims 1-23, further comprising one or more optical lenses for focusing the light emitted from the light-emitting diodes.

25. A lighting body or a source of light according to any one of the claims,1-24,
wherein a reflector or a shield is arranged along the edge of the lighting part.

26. A lighting body or a source of light according to claim 25, wherein the edge reflector or shield is arranged so as to form a shield for the outer edge of the field of emitted light.
